# EUROPEAN PATENT SPECIFICATION

(11) **EP 2 570 396 B1**
(45) Date of publication and mention of the grant of the patent: **31.08.2016**
(21) Application number: 12184417.9
(22) Date of filing: 14.09.2012
(51) Int. Cl.: C03B 37/02, C03B 37/022

(54) **METHOD OF PRODUCING COMPOSITES WITH DIELECTRIC MATRICES**
VERFAHREN ZUR HERSTELLUNG VON VERBUNDWERKSTOFFEN UMFASSEND DIELEKTRISCHE MATRIXE
PROCÉDÉ DE FABRICATION DE COMPOSITES COMPRENANT DES MATRICES DIÉLECTRIQUES

(30) Priority: 15.09.2011 PL 39634011
(43) Date of publication of application: 20.03.2013
(73) Proprietor: Instytut Technologii Materialów Elektronicznych, 01-919 Warszawa (PL)
(72) Inventor: Klos, Andrzej, 00-019 Warszawa (PL); Gajc, Marcin, 03-316 Warszawa (PL); Sadecka, Katarzyna, 04-163 Warszawa (PL); Pawlak, Dorota, 01-835 Warszawa (PL)
(74) Representative: Sielewiesiuk, Jakub

(56) References cited:
- US-A- 3 881 945
- US-A1- 2010 192 851
- US-A1- 2010 203 351
- US-A1- 2011 018 155
- KLOS A ET AL: "Bottom-up approach to hybrid metallodielectric materials", TRANSPARENT OPTICAL NETWORKS, 2009. ICTON '09. 11TH INTERNATIONAL CONFERENCE ON, IEEE, PISCATAWAY, NJ, USA, 28 June 2009 (2009-06-28), pages 1-4, XP031498975, ISBN: 978-1-4244-4825-8
- SANCHO-PARRAMON J ET AL: "Optical and structural properties of silver nanoparticles in glass matrix formed by thermal annealing of field assisted film dissolution", OPTICAL MATERIALS, ELSEVIER SCIENCE PUBLISHERS B.V. AMSTERDAM, NL, vol. 32, no. 4, 14 November 2009 (2009-11-14), pages 510-514, XP026832127, ISSN: 0925-3467 [retrieved on 2009-12-16]
- P. RUDOLPH; T. FUKUDA: CYST. RES. AND TECHNOL., vol. 34, 1999, pages 3-40, XP002741937,
- MUNOZ F ET AL: "THE EFFECT OF THE HYDROSTATIC PRESSURE ON THE DRAWING PROCESS OF PHOSPHATE GLASS FIBRES", GLASS TECHNOLOGY: EUROPEAN JOURNAL OF GLASS SCIENCE & TECHNOLOGY PART A, SOCIETY OF GLASS TECHNOLOGY, SHEFFIELD, GB, vol. 47, no. 4, August 2006 (2006-08), pages 97-102, XP001504318, ISSN: 1753-3546

## Description

The object of the invention is a method for producing composites with dielectric matrices comprising metallic and/or semi-conductive nanoparticles in the form of rods, which are used especially in plasmonics and optoelectronics, comprising metallic and/or semi-conductive nanoparticles in their volume.

Composites with dielectric matrices which comprise metallic and/or semi-conductive nanoparticles in their volume show plasmonic properties, the physical basis of which is provided by coherent oscillations of the conduction band electrons in metallic nanoparticles in interaction with an electromagnetic wave. If the nanoparticles themselves are in a dielectric environment, for a proper frequency of electromagnetic wave, electromagnetic coupling may occur between the wave field and the electron plasma oscillations. This phenomenon is called the plasmon resonance. This resonance may take place also in the case when the electron gas oscillations are excited in the valence band of semi-conductive nanoparticles. The effect is an enhancement of the electric field at a frequency equal to the plasmon frequency of electrons in the nanoparticles on the metal-dielectric contact. Plasmon resonance takes place when nanoparticles with an actual value of dielectric permittivity of Re {εₘ} < 0 find themselves in a dielectric matrix with dielectric permittivity of ε_{d} >0 and when the size of the nanoparticles is smaller than the length of the electromagnetic wave passing through the matrix.

Various methods of producing metal-dielectric and/or semiconductor-dielectric composites are known. X.C.Yang et al., Journal of Non-Crystalline Solids, 328 (2003) 123-136, report a commonly used method which consists of an exchange of the ions, being an element of the matrix grid, for metallic ions which show the plasmon effect in near infrared and in the visible range of the spectrum. In the next stage of the thermal treatment process, clusters of nanoparticles are produced. In a publication by A. Licciulli et al., Journal of Non-Crystalline Solids, 194 (1996) 225-234, the sol-gel technology is described. Both these methods refer to the production of layered metal-dielectric composites.

From a publication by J.Sancho-Parramon et al., Optical Materials, 32 (2010) 510-514, a method which consists of thermal or electric diffusion of metal to glass from a metallic layer applied on the surface is known. From a publication by A.L.Stepanov et al., Glass Physics and Chemistry, 28 (2002) 90-95, a method which consists of the implantation of ions of metal into the dielectric matrix and then their reduction and the production of nanoparticles by thermal treatment is known.

However, both thermal diffusion and implantation have a limited reach of in-depth penetration into the matrix, which makes it impossible to ensure a uniform distribution of the nanoparticles throughout the matrix.

Rods of single crystals and eutectic compounds are produced by the gravitational micro-pulling down method from the melt, known from a work by P. Rudolph, T. Fukuda, Cyst. Res. and Technol. 34 (1999) 3-40. In this method, the input material is melted in a crucible and flows into a capillary situated in the lower part of the crucible, forming a meniscus below the capillary. A crystalline seed is introduced from the bottom to the capillary and, after getting in contact with the melt, the gravitational pulling down of the rod begins. The shape of the crystallization front, specific for a given material, is formed by setting up a proper gradient of temperature in the capillary area. The use of this method of producing the rods with dielectric matrix with built-in nanoparticles of metal and/or semiconductor is known so far only from a conference publication by A.Klos et al., Transparent Optical Networks, 2009. ICTON'09.11th Int. Conf. ON, IEEE, Piscataway, NJ, US, 28 June 2009, pp 1-4.

The method according to the invention makes it possible to produce hybrids of dielectric-nanoparticles of at least one metal and/or semiconductor in form of rods of diameter up to 5 mm, using the technique of micro-pulling down, simultaneously providing a uniform distribution of the nanoparticles throughout the entire volume of the rod.

The method according to the invention consists in that a dielectric input material is milled into a fine crystalline granulate which is thoroughly mixed with the nanoparticles of at least one metal and/or semi-conductive compound having the melting point higher than the melting point of the matrix, and then the thus-produced matrix with nanoparticles uniformly distributed throughout its volume is melted at a temperature lower than the melting point of the nanoparticles in a crucible of a system for micro-pulling down from melt, after which said matrix undergoes the process of gravitational micro-pulling down, producing a dielectric rod doped with metal and/or semiconductor nanoparticles.

Preferably, before milling, the dielectric input material is subjected to a thermal processing above its melting point, and then the thus-obtained dielectric matrix is processed into the form of a fiber, after which the fiber is milled into the form of a fine crystalline granulate.

Most preferably, the dielectric matrix is processed into the form of a fiber by the method of gravitational micro-pulling down.

As the dielectric matrix, preferably inorganic or organic glass, most preferably Na₅B₂P₃O₁₃ glass, or the NaBO₂-NaPO₃ eutectic mixture as well as single crystal materials, most preferably Bi₁₂GeO₂₀, are used, which enables producing single crystal composites of the required orientation.

As the nanoparticles, preferably nanoparticles of at least one metal and/or semi-conductive compound doped with rare earth compounds, preferably with Er₂O₃, are used, which, in conditions of micro-pulling down, build themselves into the crystalline lattice in the form of atoms.

Preferably, as metal nanoparticles, nanoparticles of silver and/or nickel are used.

Preferably, as nanoparticles of a semi-conductive compound, nanoparticles of a solid solution of SnO₂ and In₂O₃ are used.

Preferably, nanoparticles of elongated shape referred to as nanowires are used.

When single crystal materials are used as a dielectric matrix, the matrix with nanoparticles is melted in a crucible made of metal having a high melting point, preferably of platinum or iridium.

When glass is used as the dielectric matrix, the matrix with nanoparticles is melted in a ceramic crucible, wherein the ceramic crucible is placed in the system for micro-pulling down additionally inside a cylinder made of metal having a high melting point, preferably of platinum or iridium, and is additionally placed on a ceramic cylinder.

In the process of gravitational micro-pulling down from the melt, especially when the matrix is of glass, high growth rates are applied on the crystallisation front, most preferably over 5 mm/min.

The method according to the invention makes it possible to produce composites with a dielectric matrix in form of rods of diameter up to 5 mm, with nanoparticles uniformly arranged throughout the entire volume of the matrix. These composites are used in micro-devices in form of photonic fibres, as non-linear absorbers, as an ultrafast optical switches, sensors, solar cell up-converters, and as high intensity non-linear materials for second and third harmonic generation.

When using nanowires, the composites being produced have anisotropic optical properties. It is possible because the outflow from the capillary has one, specific, preferred direction compatible with the direction of the force of gravity and the stream of the liquid flowing out will set the nanoparticles in one direction, which gives the effect of optical dichroism, which enables production of polarisers, selective absorbers, optical switches etc.

The content of dopants of rare earth atoms in the matrix volume combined with metal nanoparticles increases the intensity of luminescence, which is especially used in shortwave lasers or optical displays.

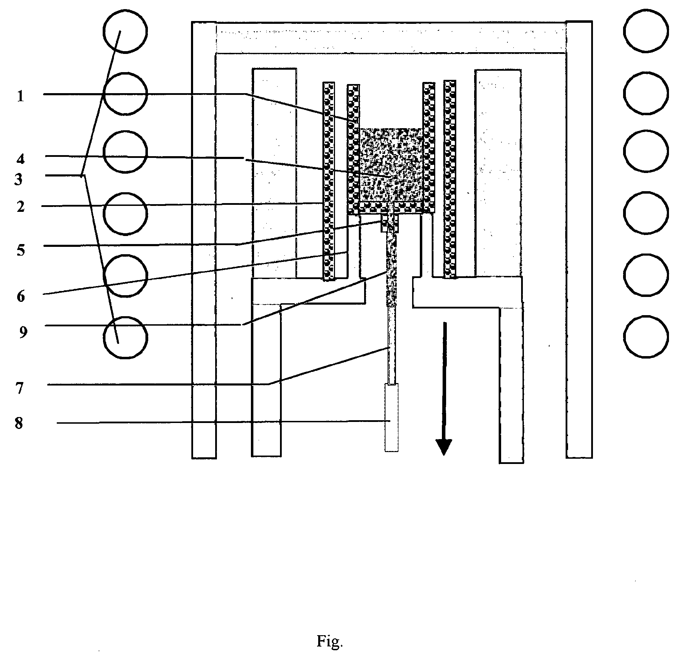

The examples provided below illustrate the method of invention in its particular embodiments based on an example of a system for gravitational micro-pulling down of a melt, presented schematically on the drawing.

Example 1. 10 g of the stoichiometric mixture of Na₂CO₃, B₂O₃ and NH₄H₂PO₄ is thoroughly mixed in a mechanical mixer and then it is melted at a temperature of a few degrees above the melting point of Na₅B₂P₃O₁₃, abbreviated: NBP, from 796°C to 806°C, and a fibre is produced by means of a technique of gravitational micro-pulling down. The produced glass fibre is triturated, first in a mortar and then in a planetary ball mill, using a 5-10 mm diameter tungsten carbide balls in a suspension of high-boiling diethylene glycol monobutyl ether solvent, to the form of fine crystalline NBP granulate. Then, 0.05g of silver nanoparticles is added to the granulate in order to produce the percentage content of silver in the matrix equal to 0.5% of weight. Achieving the uniform distribution of nanoparticles in the matrix requires breaking the agglomerates of silver, into which the hydroscopic nanoparticles with highly developed surface easily cluster. The nanoparticles in the matrix are dispersed by re-milling the mixture in the planetary ball mill. The thus-prepared input material in form of a suspension is placed in the ceramic crucible 1 with the diameter of approx. 10 mm, which is then fixed in the system for micro-pulling down from the melt. The crucible 1 is placed inside a platinum cylinder 2 and heated by means of the inductive heater 3. The platinum cylinder works as a heater for the crucible 1. The crucible 1 is supported on the ceramic cylinder 6 providing thermal insulation for the growing rod. The material in the crucible 1 is heated up slowly at the rate of 1-1.5°C per minute by means of the conductive heater 3 up to the temperature of 230°C and then, after evaporation of the solvent, the temperature is increased until the dielectric charge material melts, that is, until it reaches 796°C, providing the melt 4. The heated melt 4 has a higher temperature near walls of the crucible 1 than in the centre, which forms convective currents in the melt 4, that cause additional thorough mixing of the nanoparticles in the matrix. The melt 4 flows into the capillary 5, situated in the lower part of the crucible 1, forming a meniscus below the capillary. From the bottom side, the crystalline seed 7 from the material of the matrix is introduced into the capillary. After the seed 7 makes contact with the melt and after turning on the process of lowering the seed 7 down the leading tube 8, as a result of the gravitational micro-pulling down, a metal-dielectric composite rod 9 with diameter up to 5 mm is produced. Additionally, the increased supercooling on the crystallisation front is achieved by high growth rates, of above 5mm/min. Thus obtained metal-dielectric road shows plasmon resonance peak in the reflection spectrum in the wavelength range of 400 - 410 nm.

Example 2. 10 g of the stoichiometric mixture of Bi₂O₃ and GeO₂ oxides is thoroughly agitated in a mechanical mixer and then subjected to gravitational micro-pulling down. The produced Bi₁₂GeO₂₀ crystal fibre, abbreviated BGO, is triturated in a mortar and then in a planetary ball mill, with the use of 5-10 mm diameter tungsten carbide balls in a suspension of high-boiling diethylene glycol monobutyl ether solvent, to form a fine crystalline BGO granulate. 0.5g of nickel nanoparticles with diameters 40 - 60 nm is added to the granulate in order to produce the percentage content of nickel in the matrix equal to 5% of weight. Achieving the uniform distribution of the nanoparticles in the matrix requires breaking the agglomerates of nickel, into which the hydroscopic nanoparticles with highly developed surface easily cluster. The nanoparticles in the matrix are dispersed by re-milling the mixture in the planetary ball mill. The thus-prepared input material is placed in the form of suspension in a platinum crucible 1 with diameter 10 mm, which is then fixed in the system for micro-pulling down from the melt. The material in the crucible 1 is heated up slowly at the rate of 1-1.5°C per minute by means of an inductive heater 3 up to a temperature of 230°C and then, after evaporation of the solvent, the temperature is increased until the dielectric charge material melts, that is, until it reaches 930°C, providing the melt 4. The subsequent steps are mainly as described in example 1, except that the crystalline seed 7 made of the matrix material is undoped BGO and is introduced into the capillary. Moreover, the rate of growth is 1 mm/min.

As a result of the process, a 5 mm diameter metal-dielectric composite rod 9 is produced.

Example 3. The mixture of 6.45g of Na₂CO₃, 1.39g of B₂O₃ and 6.93g of NH₄H₂PO₄ is initially mixed in a mortar and then is placed in a platinum crucible 1 of the system for micro-pulling down, with a large temperature gradient, and it is heated up to a temperature of approx. 770°C until it melts, and then the thus-obtained eutectic mixture of composition of 29 mol% of NaBO₂ - 71 mol% of NaPO₃, consisting of a glass matrix, is subjected to the gravitational micro-pulling down. The produced rod is initially triturated in a mortar and then in a ball mill, as in example 1.

After milling the glass matrix, 1% by weight of nanoparticles of the ITO semiconductor, that is, of the solid solution of SnO₂ and In₂O₃ with the average diameter of 40 nm, is added to the suspension and then placed again in the ball mill for 1 hour, wherein the ITO agglomerates are broken and dispersed.

The thus-prepared input material in the form of a suspension is placed in a ceramic crucible 1 of a diameter of 12 mm and with a capillary hole diameter of 0.8 mm. The crucible 1 is placed in the system for micro-pulling down inside the platinum cylinder 2, and heated by means of the inductive heater 3. The platinum cylinder works as a heater for the crucible 1. The crucible 1 is supported on a ceramic cylinder, as in example 1. The material in the crucible 1 is heated up slowly at the rates of 1-1.5°C per minute by means of the conductive heater 3 up to a temperature of 230°C and then, after evaporation of the solvent, the temperature is increased until the dielectric charge material melts, that is, until it reaches 770°C, providing the melt 4. The subsequent steps are the same as in example 1, except that a seed 7 made of the eutectic mixture matrix material is used. The rod 9 is pulled down with a rate of 5 mm/min until the crucible 1 is empty. Due to the structure of the ITO energy levels, the obtained rod shows the plasmon resonance in the reflection spectrum in the near infrared region at a wavelength of 1.5 - 1.8 µm.

Example 4. The material of the matrix, the NBP glass is prepared as shown in example 1. Then, 1g of nanoparticles of silver and 1g of the Er₂O₃ powder of average grain size 8-10 µm are triturated in the mortar. 0.4 g of this mixture is added to 10 g of the milled NBP glass granulate and then it is thoroughly agitated and homogenised in a ball mill in diethylene glycol monobutyl ether solvent for 1 hour. The thus-obtained homogeneous NBP material - nanoparticles of Ag-Er₂O₃ in the form of a suspension - is placed in the ceramic crucible 1 of the system for micro-pulling down. The ceramic crucible 1 is placed inside the platinum cylinder 2 and it is supported on the ceramic cylinder 5, as in example 1. The procedure is to be followed as presented in example 1 until the entire material is pulled out of the crucible 1. The rod 9 is then torn away from the capillary 5 of the crucible 1 and is cooled down for 3 hours.

Due to the interaction between the electric field of plasmons in the metal with the field of the Er atoms, the luminescence of the rare earth atom increases. A 10% increase of luminosity has been determined at 1.56 µm as compared to the luminescence of NBP doped with erbium.

## Claims

1. A method of producing composites with dielectric matrices comprising metallic and/or semi-conductive nanoparticles in the form of rods with plasmonic properties, **characterised in that** a dielectric input material is milled into the form of a fine crystalline granulate, which is thoroughly mixed with nanoparticles of at least one metal and/or semi-conductive compound having the melting point higher than the melting point of the matrix, and then the thus-produced matrix with nanoparticles uniformly distributed throughout its volume is melted at a temperature lower than the melting point of the nanoparticles in a crucible (1) of a system for micro-pulling down from the melt, after which said matrix undergoes the process of gravitational micro-pulling down.

2. The method according to claim 1, **characterised in that** the dielectric input material is subjected to a thermal processing above its melting point, and then the thus-obtained dielectric matrix is processed into the form of a fiber, after which the fiber is milled into the form of a fine crystalline granulate.

3. The method according to claim 2, **characterised in that** the dielectric matrix is processed into the form of a fiber by the method of gravitational micro-pulling down from the melt.

4. The method according to claim 1, **characterised in that** as the crucible (1), a crucible made of metal having a high melting point, preferably of platinum or iridium, is used.

5. The method according to claim 1, **characterised in that** as the crucible (1), a ceramic crucible is used.

6. The method according to claim 5, **characterised in that** the ceramic crucible (1) is additionally placed inside a cylinder (2) made of metal having a high melting point, preferably of platinum or iridium.

7. The method according to claim 5, **characterised in that** the ceramic crucible (1) is additionally placed on a ceramic cylinder (6).

8. The method according to claim 1, **characterised in that** in the process of gravitational micro-pulling down from the melt, high growth rates are applied on the crystallisation front, preferably over 5 mm/min.

9. The method according to claim 1, **characterised in that** inorganic or organic glass, preferably Na₅B₂P₃O₁₃ glass or the eutectic mixture NaBO₂ - NaPO₃, are used as the dielectric matrix.

10. The method according to claim 1, **characterised in that** single crystal materials, preferably Bi₁₂GeO₂₀, are used as the dielectric matrix.

11. The method according to claim 1, **characterised in that** the nanoparticles of at least one metal and/or semi-conductive compound doped with rare earth compounds, preferably with Er₂O₃, are used.

12. The method according to claim 1, **characterised in that** silver nanoparticles are used.

13. The method according to claim 1, **characterised in that** nanoparticles of a solid solution of SnO₂ and InO₂ are used.

14. The method according to claim 1, **characterised in that** nano-wires of metal and/or of a semiconductor are used.

## Patentansprüche

1. Verfahren zur Produktion der Kompositen mit dielektrischen Matrizen umfassend metallischen und/oder halbleitende Nanopartikel in Form von Stäben mit plasmonischen Eigenschaften, **dadurch gekennzeichnet, dass** ein dielektrisches Eingangsmaterial in Form eines feinkristallinen Granulat vermahlen wird, das gründlich mit Nanopartikeln aus mindestens einem Metall und/oder halbleitende Verbindung mit der Schmelzpunkt höher als der Schmelzpunkt der Matrix gemischt wird, und dann die so hergestellte Matrix mit Nanopartikeln gleichmäßig über sein Volumen verteilten, bei einer Temperatur niedriger als der Schmelzpunkt der Nanopartikel in einem Tiegel (1) eines Systems zum Mikroherunterziehen aus der Schmelze geschmolzen wird, wonach besagte Matrix den Prozess der Gravitationsmikroherunterziehen läuft.

2. Verfahren nach Anspruch 1, **dadurch gekennzeichnet, dass** das dielektrische Eingangsmaterial einer thermischen Verarbeitung über seinem Schmelzpunkt unterworfen wird, und dann die so erhaltene dielektrische Matrix in die Form einer Faser verarbeitet wird, wonach die Faser in Form eines feinen kristallinen Granulat gemahlen werden.

3. Verfahren nach Anspruch 2, **dadurch gekennzeichnet, dass** die dielektrische Matrix in die Form einer Faser nach dem Verfahren von Gravitationsmikroherunterziehen aus der Schmelze verarbeitet wird.

4. Verfahren nach Anspruch 1, **dadurch gekennzeichnet, dass** als Tiegel (1), einen Tiegel aus Metall mit einem hohen Schmelzpunkt, vorzugsweise aus Platin oder Iridium, verwendet wird.

5. Verfahren nach Anspruch 1, **dadurch gekennzeichnet, dass** als Tiegel (1) ein Keramiktiegel verwendet wird.

6. Verfahren nach Anspruch 5, **dadurch gekennzeichnet, dass** Keramiktiegel (1), zusätzlich in einem Zylinder (2) aus Metall mit einem hohen Schmelzpunkt, vorzugsweise aus Platin oder Iridium angeordnet wird.

7. Verfahren nach Anspruch 5, **dadurch gekennzeichnet, dass** Keramiktiegel (1) zusätzlich auf einem Keramikzylinder (6) angeordnet wird.

8. Verfahren nach Anspruch 1, **dadurch gekennzeichnet, dass** im Prozess der Gravitationsmikroherunterziehen aus der Schmelze hohe Wachstumsraten auf der Kristallisationsfront, vorzugsweise über 5 mm/min angewendet werden.

9. Verfahren nach Anspruch 1, **dadurch gekennzeichnet, dass** anorganischem oder organischem Glas, vorzugsweise Na₅B₂P₃O₁₃ Glas oder die eutektische Mischung NaBO₂ - NaPO₃, als die dielektrische Matrix verwendet werden.

10. Verfahren nach Anspruch 1, **dadurch gekennzeichnet, dass** Einkristallmaterialien, vorzugsweise Bi₁₂GeO₂₀, als dielektrische Matrix verwendet werden.

11. Verfahren nach Anspruch 1, **dadurch gekennzeichnet, dass** die Nanopartikel aus mindestens einem Metall und/oder halbleitende Verbindung mit Verbindungen der Seltenen Erden, vorzugsweise mit Er₂O₃, dotiert, verwendet werden.

12. Verfahren nach Anspruch 1, **dadurch gekennzeichnet, dass** Silbernanopartikel verwendet werden.

13. Verfahren nach Anspruch 1, **dadurch gekennzeichnet, dass** Nanopartikel einer festen Lösung von SnO₂ und InO₂ verwendet werden.

14. Verfahren nach Anspruch 1, **dadurch gekennzeichnet, dass** Nanodrähte aus Metall und/oder aus einem Halbleiter verwendet werden.

## Revendications

1. Une méthode de production de composites à matrices diélectriques comprenant des nanoparticules métalliques et / ou semi-conductrices sous la forme de tiges ayant des propriétés plasmoniques, **caractérisée en ce qu'**un matériau diélectrique d'entrée est broyé en forme d'un granulat cristallin fin qui est complètement mélangé avec des nanoparticules d'au moins un composé métallique et /ou semi-conducteur ayant le point de fusion supérieur au point de fusion de la matrice, et ensuite la matrice ainsi produite avec des nanoparticules réparties uniformément dans tout son volume est fondue à une température inférieure au point de fusion des nanoparticules dans un creuset (1) d'un système pour la méthode de micro-pulling down de la masse fondue, après quoi ladite matrice subit le processus gravitationnel de micro-pulling down.

2. La méthode selon la revendication 1, **caractérisée en ce que** le matériau diélectrique d'entrée est soumis à un traitement thermique au-dessus de son point de fusion, et ensuite la matrice diélectrique ainsi obtenue est transformée en forme d'une fibre, après quoi la fibre est broyée en forme d'un granulat cristallin fin.

3. La méthode selon la revendication 2, **caractérisée en ce que** le matrice diélectrique est transformée en forme d'une fibre par la méthode gravitationnelle de micro-pulling down de la masse fondue.

4. La méthode selon la revendication 1, **caractérisée en ce qu'**en tant que creuset (1), un creuset en métal ayant un point de fusion élevé, de préférence en platine ou en iridium, est utilisé.

5. La méthode selon la revendication 1, **caractérisée en ce qu'**en tant que creuset (1), un creuset en céramique est utilisé.

6. La méthode selon la revendication 5, **caractérisée en ce que** le creuset (1) est en outre placé à l'intérieur d'un cylindre (2) en métal ayant un point de fusion élevé, de préférence en platine ou en iridium.

7. La méthode selon la revendication 5, **caractérisée en ce que** le creuset (1) en céramique est en outre placé sur un cylindre (6) en céramique.

8. La méthode selon la revendication 1, **caractérisée en ce que** dans le processus gravitationnel de micro-pulling down de la masse fondue, taux de croissance élevés sont appliqués sur le front de cristallisation, de préférence supérieures à 5 mm / min.

9. La méthode selon la revendication 1, **caractérisée en ce que** verre inorganique ou organique, de préférence verre Na₅B₂P₃O₁₃ ou le mélange eutectique NaBO₂ - NaPO₃, sont utilisés en tant que matrice diélectrique.

10. La méthode selon la revendication 1, **caractérisée en ce que** des matériaux monocristallins, de préférence Bi₁₂GeO₂₀, sont utilisés en tant que matrice diélectrique.

11. La méthode selon la revendication 1, **caractérisée en ce que** les nanoparticules d'au moins un composé métallique et / ou semi-conducteur dopées avec des composés de terres rares, de préférence avec Er₂O₃, sont utilisées.

12. La méthode selon la revendication 1, **caractérisée en ce que** des nanoparticules d'argent sont utilisées.

13. La méthode selon la revendication 1, **caractérisée en ce que** des nanoparticules d'une solution solide de SnO₂ et InO₂ sont utilisées.

14. La méthode selon la revendication 1, **caractérisée en ce que** des nanofils en métal et / ou en semi-conducteur sont utilisés.
